# EUROPEAN PATENT APPLICATION

(11) **EP 3 316 227 A1**
(43) Date of publication of application: **02.05.2018**
(21) Application number: 17198192.1
(22) Date of filing: 25.10.2017
(51) Int. Cl.: G07C 5/08, G07C 5/00

(54) **METHOD AND INTELLIGENT SYSTEM FOR GENERATING A PREDICTIVE OUTCOME OF A FUTURE EVENT**

(30) Priority: 28.10.2016 US 201662414122 P
(71) Applicant: Thomson Licensing LLC, Princeton, NJ 08540 (US)
(72) Inventor: SIVALINGAM, Dayan, Princeton, NJ 08540 (US); RAMALINGAM, Satheesh, Princeton, NJ 08540 (US); RAI, Sapna, Princeton, NJ 08540 (US); HEREDIA, Edwin, Princeton, NJ 08540 (US)
(74) Representative: Huchet, Anne

(57) **Abstract**

A method and apparatus for providing operational assessments for a particular vehicle is presented. In one embodiment, initial information is collected via a processor about operational history of a particular vehicle. This information is updated as the vehicle continues to be operated for a time period. In addition, a camera is used to iteratively collect driving information about driving habits of at least one driver of the vehicles also during a particular time period or distinct time intervals. Finally, a predictive outcome is generated for at least one event relating to the operation of the vehicle for a future event (beyond period of said particular time period). This is generated based on the initial information and new operational history and the driving habits.

## Description

### TECHNICAL FIELD

The present disclosure relates generally to a techniques for providing a predictive outcome and more particularly to techniques for generating a predictive outcome in operation of a vehicle.

### BACKGROUND

This section is intended to introduce the reader to various aspects of art, which may be related to various aspects of the present invention that are described and/or claimed below. This discussion is believed to be helpful in providing the reader with background information to facilitate a better understanding. Accordingly, it should be understood that these statements are to be read in this light, and not as admissions of prior art.

There is an emerging trend to automate many of the components of navigational vehicles such as cars and boats. In this regard, computers have been incorporated in such vehicles to increase reliability and improve operational facility. Many of the manual and mechanical components of these vehicles have been replaced by electronic counterparts. This allows for reduction in number of controls and overall simplicity through automation. For example, an electric starter has replaced a clank, and pedals that were physically linked to such systems as the braking mechanism and throttle are also being increasingly replaced by electronic controls.

Recently, more and more of the vehicles functions and safety operations are being automated sometimes by use of an on-board diagnostic (OBD) system or device. Early versions of OBD were simple in that they would only alert a user of a malfunction simply by a light indicator. While the current versions are more sophisticated, they are still limited in how they provide information. In addition, OBD's are tied in to a particular vehicle and therefore any alerts are issued only when that particular vehicle is in use.

Technology advancements have provided many users instant and cheap access to processors such as through the use of mobile devices. This allows the potential of using these processing devices in place or in conjunction with OBDs to improve the safety and reliability of vehicles ahead of time. Consequently, it is desirous to have improvements in the area of vehicle management that can take full advantage of recent processor capability and availability.

### SUMMARY

A method and apparatus for providing operational assessments for a particular vehicle is presented. In one embodiment, initial information is collected via a processor about operational history of a particular vehicle. This information is updated as the particular vehicle continues to be operated for a particular time period. In addition, a camera is used to collect iterative driving information about driving habits of at least one driver of the vehicle during this particular time period. Finally, a predictive outcome is generated for at least one future event relating to the operation of the vehicle. This is generated based on the initial and new operational history and information and the captured driving habits.

Additional features and advantages are realized through the techniques of the present disclosure. Other embodiments and aspects of the invention are described in detail herein and are considered a part of the claimed invention. For a better understanding of the invention with advantages and features, refer to the description and to the drawings.

### BRIEF DESCRIPTION OF THE DRAWINGS

The present disclosure will be better understood and illustrated by means of the following embodiment and execution examples, in no way limitative, with reference to the appended figures on which:
Figure 1 is a block diagram depiction of a computer system as used according to one embodiment;
Figure 2 is a block diagram depiction of a depiction of a network and system including a vehicle infotainment device according to one embodiment;
Figure 3 is a block diagram describing some operations in a system one embodiment;
Figure 4 is an example of the types of data linked by a service according to one embodiment.
Figure 5 is a flowchart depiction according to one embodiment for delivery content to one or more vehicle occupants;

Wherever possible, the same reference numerals will be used throughout the figures to refer to the same or like parts.

### DESCRIPTION

It is to be understood that the figures and descriptions of the present invention have been simplified to illustrate elements that are relevant for a clear understanding of the present principles, while eliminating, for purposes of clarity, many other elements found in typical digital multimedia content delivery methods and systems. However, because such elements are well known in the art, a detailed discussion of such elements is not provided herein. The disclosure herein is directed to all such variations and modification. In addition, various inventive features are described below that can each be used independently of one another or in combination with other features. Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

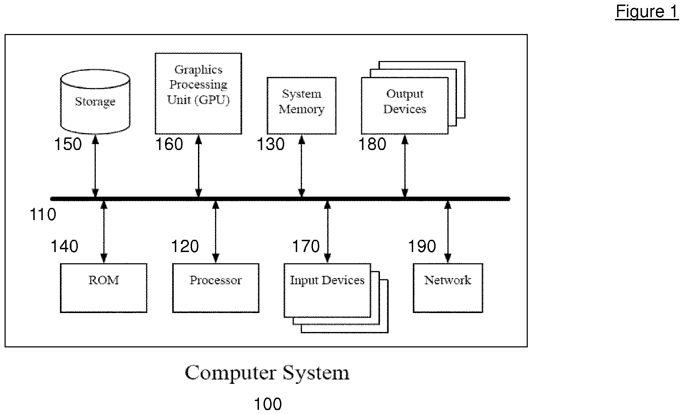

Figure 1 is a schematic block diagram illustration of a computer system 100 such as one that can be used in conjunction with different embodiments as will be discussed. The computer system 100 may be implemented using various appropriate devices. For instance, the computer system may be implemented using one or more personal computers ("PC"), servers, mobile devices (e.g., a Smartphone), tablet devices, and/or any other appropriate devices. The various devices may work alone (e.g., the computer system may be implemented as a single PC) or in conjunction (e.g., some components of the computer system may be provided by a mobile device while other components are provided by a tablet device). The computer system 100 may include one or more bus or bus systems such as depicted by 110, at least one processing element 120, a system memory 130, a read-only memory ("ROM") 140 , other components (e.g., a graphics processing unit) 160, input devices 170, output devices 180, permanent storage devices 130, and/or a network connection 190. The components of computer system may be electronic devices that automatically perform operations based on digital and/or analog input signals.

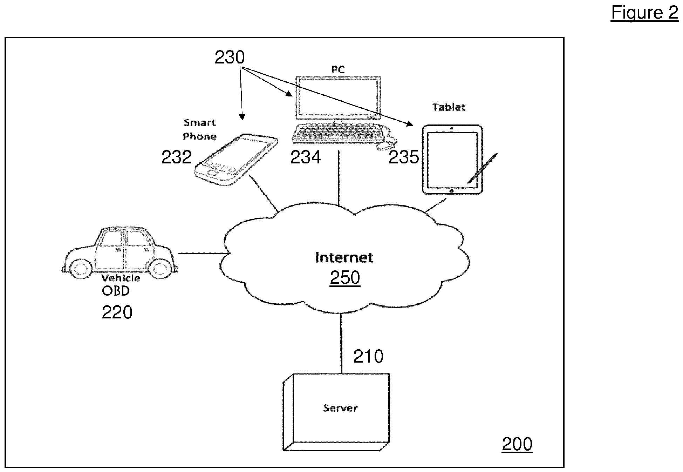

Figure 2 illustrates a block diagram of an embodiment of a system 200 for delivering content to a user such as a vehicle occupant, such as a passenger or driver, of a vehicle. The system 200 can incorporate system 100 as shown in conjunction with Figure 1. In this way, the system 200 may include a server 210 and one or more electronic devices 230 such mobile devices including smart phones (e.g., a companions device) 232, personal computers (PCs) 234 such as laptops and tablets (235) or on-board diagnostic (OBD) devices 220. The system 220 itself can include the computer system 100 of Figure 1 entirely or be in processing communication to one or more of the units shown through the user of the network 250 which forms part of the system network 200. In addition, one or more displays, processing components and user interfaces can be provided. While the illustration of Figure 2 for ease of understanding provides shows a car as an example of a vehicle, it should be understood that a vehicle is used to include all similar vessels as can be understood by those skilled in the art. As other examples, the vehicle infotainment system can be disposed and be part of a plane, a boat or cruise ship or other such navigational vessels.

In one embodiment, each electronic or mobile device 230 can have its own displays, processors and other components as can be appreciated by those skilled in the art. In addition, the server 210 and other components may be directly connected, or connected via the network 250 which may include one or more private networks, the Internet or others.

In one embodiment, the system 100/200 provides support for the management and delivery of over the top content (OTT). As known to those skilled in the art, in broadcasting OTT provides for delivery of audio, video, and other media over the Internet without the involvement of a multiple system operator in the control or distribution of the content. In one embodiment, OTT can also include content from a third party that is delivered to an end-user, by simply transporting IP packets. In another embodiment, text messaging can also be provided. In one embodiment, OTT messaging can also be provided throughout the same system such as one using one or more instant messaging services (as an alternative to text messaging) such as one provided by a mobile network provider. In one embodiment, one or more users may access the OTT service provider via the server and use their companion devices (e.g., the electronic devices such as smartphones, tablets, or PCs) to manage their subscription and purchased content. In addition, a navigation system can be provided as part of vehicle infotainment system 220 or as part of the network 250 or through the server 210. The navigation system, for example can include one or more positioning device(s) such as a global positioning system (GPS).

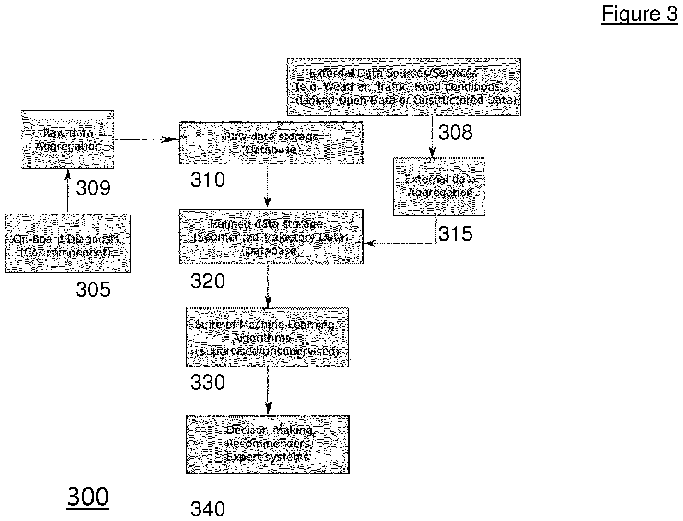

Figure 3 is a block diagram describing an intelligent system 300. Intelligent system 300, in one embodiment will incorporate system 100/200 as discussed in conjunction with Figures 1 and 2. In addition, as shown in Figure 3, intelligent system 300 will include additional components so as to make a variety of recommendations or even make decisions in circumstances where driver is not able to make such decisions due a variety of factors that can temporarily impair driver's decision making ability. In such a case the driving can be managed using a processor or a computer. The processor is configured to provide drivers intelligent data-driven decisions about interactions between the car (before, during, or after driving) and the environment (weather, traffic, road types, etc.).

To aid understanding, examples will be used to explore some situations. In one example, a driver of an electric car notices that the car's range prior to it needing recharging is a range of 30 miles. The problem is that the driver does not know if this range is sufficient for an immediate trip to a particular store 10 miles away. While the mileage to the store round trip is only 20 miles on paper, the driver realizes that the numerical distance is not the only important factor for consideration. Other factors that will affect car performance and fuel usage will include weather conditions, traffic conditions, road conditions, driving habits. In one embodiment, as will be presently discussed, an intelligent management system is provided that gathers all necessary data from the car and from other sources such as the environment. This data or information may include machine-learning algorithms to provide the necessary recommendations to the driver in one embodiment.

In another embodiment, the intelligent management system 300 can be used to improve the driving habits of a driver. Some of these habits may be in advertent and pose safety concerns. For example, a driver that drives too close to a curb or takes a certain corner too fast can become mindful of these concerns. Beyond, the safety concerns the system can be used to also address other convers. In a different example, a driver may like to find out as how to improve his/her driving habits to reduce fuel consumption on a periodical basis, such as on a daily, monthly or yearly time period. Acquiring good driving habits not only improves road safety but also it can help reducing fuel consumption. But most people are unaware of their habits that may be unintentional unless they hire an experts to frequently share and monitors their driving. Therefore, opportunities for improvement are missed. In one embodiment, machine-learning algorithms can be used in conjunction with the present intelligent system to further enable the development of personal assistants.

In addition, in one embodiments the intelligent system 300 can provide an anticipatory report or generate alerts prior to a problem occurring based on the condition of the car, similar experiences of other users, or the driving habits and other things detected and observed. In one embodiment, a periodical report can be generated that provides the most likely problems anticipated for the car for a future time period such as over the next few months. While a precise guess as what may go wrong is difficult, a good estimate can be made of potential upcoming issues based studies of similar cars and car conditions, driving habits, and similar experience with similar cars driven by other users. In this way, an automatic expert system can be built that provides this type or other customized services for one or more users.

Referring back to Figure 3, In one embodiment, the intelligent system 300 can be include an on-board diagnosis (OBD) device as discussed in Figure 2. The OBD does not necessarily have to be installed in a car. In one embodiment, it may be or operated from a computer such as a server or even a mobile device such as a smart phone. The system, in one embodiment aggregates data and transfers data to a repository. In one embodiment, the repository could be a personal database for the user such as on a mobile device like a smart phone or even a cloud-based system. In either case, as per one embodiment, the data can be collected and aggregated from multiple users.

In the exemplary embodiment of Figure 3, data can be collected during a time period or even during pre-defined time intervals. Data may include all or at least some of the information about the operation of a particular kind and other related car dynamics. It can also include other identifiers for car types, time, driver, and GPS locations as well as other materials. In one embodiment, the data is aggregated in a general-purpose database. If the database hosts data from many (i.e millions) users, the database will use architectures for distributing data across nodes in storage data centers. These architectures will not be discussed here in detail as they are generally known to persons skilled in the art.

In one embodiment, system 300 collects the raw data from a variety of sources such as OBD 305 and aggregates it as shown at 309. External data 308 can be also provided such as weather and road conditions as shown. It will then store the raw data in a database 310 and aggregates and stores it as "refined data" such as in a database as shown at 320. External data aggregators as will be discussed and shown at 315 can also provide aggregate data to the refined database. The term refined data here represents highly structured linked data that can be used for machine-learning operations 330. It can additionally, it can be used for decision making 340 as the basis for the personalized experts and recommenders. However, as can be appreciated by those skilled in the art, in alternate embodiments other similar arrangements can be used.

In another embodiment, the data will be highly structured and grouped so as to serve the purpose of capturing historic descriptions of trajectory segments for drivers while driving by the system 300. In this embodiment, refined data can be described as a linked graph because it aggregates data from multiple sources.

In addition, a refined data set can be generated and described similarly and data and information can be organized in a relational database in pieces such as a collection of trajectory segments. To aid understanding, for a current example, trajectory is defined as the route a driver takes to go from an initial location to a final location (but it can be defined otherwise in alternate embodiments). The route trajectory in this example can be divided into smaller segments. A segment can represent a certain distance in the trajectory (e.g. 2 miles), or it may represent a certain time interval in the trajectory (e.g. first 10 minutes).

Referring back to Figure 3, in one embodiment, the system 300 includes an external data aggregation component designed to add as much relevant information as possible from external sources to each of the trajectory segments available in the refined data set. In one embodiment data linking process can be used. In one embodiment, if the sources come from external sources, such as those organizations that openly publish data, the data is often known as Linked Open Data (LOD) and the system 300 will have the capability to add this data to be used in information aggregation as needed and appropriate. Linked Open Data may also be processed when received in the form of graphs. In one embodiment, it is possible to import a subset of the graphs with application data.

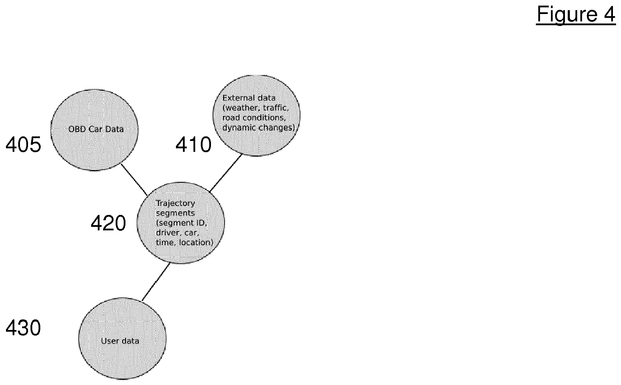

To aid understanding, in an example a trajectory segment of 2 miles is provided for a particular user at a given time in Figure 4. As shown in Figure 4 at 410, the refined data set for this segment will aggregate all of the relevant car-related data including in this example categories that include average speed, number of left turns, number of right turns, number of stops, fuel consumption, electric energy consumption, GPS coordinates, etc. The external data aggregation component shown at 420 will bring in data items such as traffic conditions, weather conditions, road conditions, and special nearby events (street closures due to construction, farmer markets, games, etc.). Other information is provided by OBD at 405. The final data will be then generated by the intelligent system 300, using the relational graph of Figure 4 such that interlinks all the heterogeneous sources provided to it in this example.

In one embodiment a suite of machine learning algorithms can be used to identify (and continuously learn) patterns from the data. Other methods are used in alternate embodiments. When machine-learning algorithms are used data that includes both supervised and unsupervised methods of collection can be incorporated. Unsupervised methods can be used, for example, to classify drivers that drive during winter conditions into: 'extremely careful', 'careful', 'average', 'careless', 'extremely careless'. Supervised methods can be used, for example, to predict the impact of traffic congestion and weather conditions on fuel consumption for urban and rural settings. Supervised learning methods can include deep learning algorithms where a neural network is trained to identify patterns like driving habits based on collected car data and environment data.

In one embodiment, these machine-learning algorithms can be used for the deployment of classifiers, recommenders, decision engines, and expert systems. These machine-learning algorithms may be able to use data from different but similar drivers (persons) to classify, predict, or find patterns for a single driver. These machine-learning algorithms may be highly dynamic. They may be able to change their outcome (classification, prediction, pattern recognition) based on dynamic changes to the environment. For example, if the system is used to predict energy consumption for a trip from A to B, the system can dynamically compute new estimates in case of sudden nearby accidents.

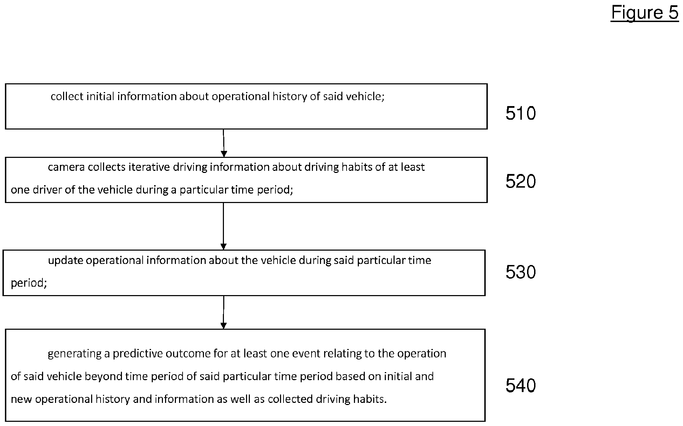

Figure 5 is a flow chart depiction of one embodiment using a system such as the intelligent system 300 of Figure 3. Figure 5 depicts a methodology for providing operational assessments for a vehicle. As shown in step 510, initial information is collected via a processor about operational history of a particular vehicle. This information is then updated as the vehicle continues to be operated for a distinct time periods as provided in step 530. In addition, as depicted in step 520, a camera is used to collect iterative driving information about driving habits of at least one driver of the vehicles also during a particular time period or distinct time intervals. Finally, as depicted in step 540, a predictive outcome is generated for at least one event relating to the operation of the vehicle for a future event (beyond period of said particular time period). This is generated based on the initial and new operational history and information and the captured driving habits.

## Claims

1. A method, implemented by at least one processor comprising:
receiving (310) operational information of a vehicle;
monitoring (320) driving information of a driver driving said vehicle during a time period;
updating (350) said operational information vehicle based on at least one said monitored information; and
generating (360) a predictive outcome for at least one future event relating to operation of said vehicle based on said updated operational information and said driving information of said at least one driver.

2. An apparatus comprising at least one processor (420) configured to:
receive operational information of a vehicle;
monitor driving information of a driver driving said vehicle during a time period;
update said operational information about said vehicle based on said monitored information; and
a generator (240) for providing a predictive outcome for at least one future event relating to operation of said vehicle based on said updated operational information and said driving information of said at least one driver.

3. The method of claim 1 or apparatus of claim 2 wherein said processor is in a mobile device.

4. The method of claim 1 or apparatus of claim 2 wherein said processor is in a vehicle infotainment device.

5. The method of claims any one of 1 and 3 to 4 or the apparatus of any one of claims 2 to 4, wherein said initial information includes at least one of said vehicle's make, model and previous maintenance records.

6. The method of any one of claims 1 and 3 to 5 or the apparatus of any one of claims 2 to 5, further comprising generating a report based on said predictive outcome, wherein said report includes at least one alert about future maintenance needs of said vehicle.

7. The method of any one of claims 1 and 2 to 6 or the apparatus of any one of claims 2 to 6, wherein said processor obtains raw data relating to said initial information from a database and transforms said raw data into refined data for further processing.

8. The method of claim 7 or apparatus of claim 7, wherein said processor aggregates said refined data and stores it in a repository.

9. The method of claim 8 or apparatus of claim 8, wherein said repository is part of a user profile that is only accessible to a first driver.

10. The method of claim 8 or apparatus of claim 8, wherein said repository is accessible to a limited group of drivers.

11. The method of claim 8 or apparatus of claim 8, wherein said repository is specified by time, driver, and GPS locations.

12. The method of claim 8 or apparatus of claim 8, wherein said refined data is a highly structured linked data.

13. The method of claim 8 or apparatus of claim 8, wherein said refined data is used for machine-learning operations.

14. The method of any one of claims 1 and 3 to 13 or the apparatus of any one of claims 2 to 13, wherein said processor is included in an on-board vehicle diagnosis component (OBD).

15. A non-transitory computer readable medium comprising instructions for implementing the method of any one of claims 1 and 3 to 14 when executed by a processor.
